# EUROPEAN PATENT SPECIFICATION

(11) **EP 2 399 461 B1**
(45) Date of publication and mention of the grant of the patent: **09.03.2016**
(21) Application number: 11169367.7
(22) Date of filing: 09.06.2011
(51) Int. Cl.: A22C 7/00

(54) **A modular group for forming and cooking meat products**
Modulare Gruppe zum Formen und Kochen von Fleischprodukten
Groupe modulaire pour former et cuire des produits à base de viande

(30) Priority: 23.06.2010 IT RE20100053
(43) Date of publication of application: 28.12.2011
(73) Proprietor: Fava s.n.c. di Adele Turetta & c., 43126 Parma (IT)
(72) Inventor: Fava, Antonio, 43126 Parma (IT)
(74) Representative: Corradini, Corrado

(56) References cited:
- EP-A1- 0 722 663
- EP-A1- 2 191 724
- FR-A1- 2 485 884
- FR-A1- 2 933 573
- US-A1- 2008 163 761

## Description

The present invention relates to moulds for forming and cooking meat products, in particular the preparation of salt and sacked meats, such as cooked hams and like products, having a compact shape in which the maximum dimension (length) is not more than three times the intermediate dimension (width or thickness) of the product and having a rounded shape, better if at all its points.

The prior art has for a long time comprised semi-finished meat products in moulds, with a certain pressure, mainly for supplying the product with a consistent compactness and a desired shape, see e.g. US 2008/0163761.

The prior art the present invention relates to includes use of single moulds comprising a matrix conformed as a recipient for containing the meat, the concavity of which faces upwards, and having a concavity facing upwards, the internal surface of which does not in general exhibit non-rounded corners, but, on the contrary, exhibits rounded surfaces, able to give the product a rounded shape that is particularly favoured by the market; in particular, the internal lateral surface of the matrices, at least in the horizontal-plane section, is without sharp edges and corners.

The upper mouth of the matrix is closed by a cover, flat or rounded according to the case, destined to slide internally of the concavity, in order to compress the product; further, a contrast element is comprised, constrained to the matrix, and elastic pushing means, interposed between the cover and the contrasting element, destined to push the cover in the direction of compressing the meat contained in the matrix (known producers are Menozzi, Manzini, Riva and other companies from outside Italy).

Given the rounded form of the products and, consequently the internal surface of the mould, it is often in practice necessary to make the matrices by metal moulding (generally an aluminium alloy), or by pressing stainless steel sheet metal, with a plastic deformation of the sheet, in order to obtain a matrix having an internal surface free of edges and discontinuities, or, finally, by means of welding of shaped or bent parts, in which case non-rounded corners are inevitable, especially on the bottom.

The cooking can be done in impermeable wrappings, where the product is not in contact with air (commonly known as vacuum cooking), in order to improve the compacting and the monolithic "block-like" aspect of the product; cooking can however also be done in permeable wrappers.

Impermeable wrappers are mostly constituted by bags made of flexible and heat-weldable plastic that are housed in the concavity of the matrix, where the bags are filled with the product (meat, possibly treated with injections of saline solutions and massaged using suitable machines).

The products are obtained by keeping the wrapper full of meat in the matrix, pressed by a cover, and then subjecting the product to cooking together with the mould that contains it. Thus a spatial conditioning is imposed on the product internally of the matrix, which enables obtaining, in this case, an aspect of a resulting slice of the product which is similar in appearance to a whole-cooked product, with better results in terms of the taste and texture of the slices.

In other cases the product is inserted in the closed matrix in a wrapper obtained by heat-formed laminate.

Finally, it is also possible to use permeable wrappers which separate, though not hermetically, the product from the mould, preventing adhesion which otherwise would obtain, during the stage of cooking, between the meat and the mould if they were directly in contact.

The products are divided into products with or without weight loss, i.e. the reduction of the product weight that occurs with products cooked in permeable wrappers, but also when during vacuum cooking a part separates from the meat, in the form of liquid or gelatine (the "exudate") internally of the cooking wrapper.

When the weight loss is considerable, an excess portion is necessary in the sealed and vacuum-packed wrapper, which excess part is at first empty but which then collects the exudate during the cooking stage.

Weight loss is a term used to define products which contain an exudate of greater than 3% in the cooking wrapper.

For these products a space has to be comprised in the cooking wrapper in which the exudate can collect. As a rule the greater the weight loss the greater the quality of the final product. The above-described bags enable optimal use of the weight-loss method and can also cater for relatively high weight loss, as they enable the excess part of the bag to be arranged by a side of and parallel to the product, or outside the mould.

Though enabling realising of top-quality products, the above moulds do not enable full and rational exploitation of tradition cooking ovens, in which it is industrially necessary to introduce the produce in regular and rational stacks, due to the fact that these moulds, owing to the conformation thereof, do not lend themselves to being stacked satisfactorily.

It is in fact not possible to vertically rest the moulds one on top of another as the weight bearing down on the lower moulds varies the pressure with which the meat is pressed by the matrix cover, with a consequent variation in the quality of the product, up to reaching pressures of an excessive and not acceptable amount. Moreover, sufficiently stable stacks are not obtained in this way.

A single known example of stacking of these moulds comprises stacking them in a pyramid formation in a vertical plane, where each matrix rests directly on two underlying matrices.

A stacking of this type however poses various technical problems. Firstly it poses problems of stability; further, the interstitial space between the matrices is relatively very small and allows neither efficient circulation of the steam between the moulds, with a consequent poor distribution of temperatures, nor enables arranging the excessive parts of the bags outside the cavities of the matrix along the longitudinal flanks of the mould, preventing good weight-loss performance.

A different technology comprises the use of matrices having a very elongate shape in a horizontal direction for realising correspondingly elongate products, where the length (maximum dimension) exceeds by three times or more the intermediate dimension (width or thickness) of the product, and where further the length is however longer than 80 cm. In order to rationalise the stacking of the moulds during treatment in the cooking ovens, several matrices are flanked to one another in a row which develops in a transversal direction and are unremovably joined to one another by heads to which all the ends of the matrices are joined. In effect large trays are formed, the shape of which in plan view is more or less square, which trays are then superposed on one another to form a large stack for the cooking stage (constructors include Armorinox, Kaufler, Cremino, Roser and others). Though this solution enables good vertical stacking, the matrices are made using bent sheet metal or profiled members; in particular, it is important to note that for economic reasons the matrices are not conveniently realisable by die-casting or hot-moulding due to the cost of realisation, which in this case is very high indeed.

The above solution in practice enables obtaining only relatively very long products, suitable for destinations and uses which are normally different to those for which particularly compact products are destined, the present invention relates to the latter type.

Attempts have been made to use these particularly long matrices for realising shorter products, by for example interposing separators that are not specially shaped, without however having succeeded in obtaining products lacking in smoothness of shape and edges. The products obtained had substantially the shape of a cylinder (with a more or less round section), with abrupt cuts at the ends thereof, an effect which did not gain the market's approval.

The aim of the present invention is to provide means that can realise a compact product which presents no discontinuities in the sense of non-rounded parts and corners, preferably in the part of the product which is profiled by the internal lateral surface of the matrices, at least in the section in a horizontal plane.

An aim of the present invention is to enable a more rational use of traditional known moulds of the single type for forming and cooking the compact meat products, preferably completely free of corners and edges, in which the maximum dimension is less than three times the intermediate dimension (the three dimensions being identified by the three Cartesian axes), which are realised either by a die-casting or hot-moulding process with plastic deformation or shaping and welding, and which further enable stacking the identical moulds such as to obviate the above-described drawbacks which the traditional single moulds suffer from.

The mould of the invention enables realisation of a modular group system made of single moulds joined together after realisation thereof, which can be effectively stacked in vertical columns and horizontal rows, thus realising various technical advantages.

A further advantage is to be able to form stable stacks more easily movable by trucks or the like.

A further advantage is the possibility of stacking the moulds such as to increase the load of kg/cubic metre and kg/square metre.

A further advantage is the possibility of further increasing the kg/cubic metre and kg/square metre load thanks to the possibility of realising self-stabilising stacks, i.e. having greater height than is obtainable with other systems.

A further advantage is the possibility of arranging, with minimum risk of damage, the bag for the exudate on an external flank of the mould and therefore to treat products with a desired resulting weight-loss and in particular a higher weight-loss than is obtainable for tray systems used in the production of hams in a bar-shape.

A further advantage is the possibility of realising adequate steam- and water-circulation corridors in the stack, in order to obtain a more homogeneous distribution of the temperature in the stages of cooking and cooling. This enables use of traditional ovens, appropriately adequate, but also cooking by immersion, with the use of suitable movement systems of the stack.

A further advantage is that the presence of dummy moulds can be dispensed with, with less labour for the operators and with a greater quality in the positioning result as the product does not move from the position imparted during moulding.

A further advantage is the possibility of conveying the moulds by the side of production lines using heat-formers or vacuum-packing machines with clipping of the wrapper, for a simpler or even automatic introduction of the products in the matrices, with an evident reduction in the size of the plants, plus more ergonomic working conditions.

A further advantage is the possibility of having matrices (filling bases) exhibiting a great constructional simplicity.

A further advantage is the possibility of automating the loading and unloading for composition and unstacking of the ordered stack, with systems exhibiting lower encumbrance and invoking lower costs than systems using trays.

A further advantage is the realisation of the pressing operations during the stacking stage, with evident advantages in terms of productivity and containment of the volumes.

A further advantage is the possibility of using semi-automatic or robotic systems, using widely-known commercial products in terms of costs and reliability.

A further advantage is the possibility of rendering the pressure exerted on the product independent notwithstanding the place any particular mould occupies in the stack.

A further advantage is the possibility of using more compact moulding systems which can treat the product more carefully and gently, guaranteeing the seal of the impermeable wrappers.

A further advantage is the possibility of reducing to a minimum the presence of interstitial spaces between the single matrices and between the covers, difficult to wash and keep hygienic.

A further advantage is the possibility of using mould-washing machines of a traditional type, and not specific as in the case of tray moulds.

The aims/advantages are attained by the present invention as it is characterised in claim 1.

The dependent claims delineate preferred and/or particularly advantageous aspects of the invention.

Further characteristics and advantages of the invention will more clearly emerge from the following description, provided by way of non-limiting example, with the aid of the figures illustrated in the accompanying tables of the drawings.
Figure 1 is a perspective view from above and from the right side of the modular group of the invention.
Figure 2 is a perspective view from below and from the left side of the modular group of figure 1.
Figure 3 is a plan view from above of figure 1.
Figure 3A is an enlarged view of a detail of section A-A of figure 3.
Figure 4 is a lateral view in vertical elevation of figure 3.
Figure 5 is a plan view from below of figure 3.
Figure 6 is a front view in vertical elevation of figure 3.
Figure 7 is a section according to a transversal vertical plane, VII-VII of figure 4.
Figure 8 is a section along longitudinal vertical plane VIII-VIII of figure 3 of two modular groups during a stage of reciprocal superposing.
Figure 9 is a larger-scale view of figure 8, where the two modular groups are superposed in contact with one another.
Figures 10A, 10B illustrate two successive stages during the reciprocal superposing of the two modular groups of figure 8.
Figure 11 is a perspective view of a stack of modular groups, in a suitable configuration for the cooking stage of the product contained therein.
Figure 12 is a front elevation of the plurality of modular groups of figure 11, in part stacked on one another, and in part in a stage of stacking.
Figure 13a is an enlarged view of a detail, in a view from above, of figure 12, in which the lateral hooking elements of two modular groups are illustrated.
Figure 13b is a perspective view of the hooking elements of figure 13a.
Figure 14 relates to a second embodiment; it is a front elevation of a plurality of modular groups, in part stacked on one another, and in part in a stacking stage.
Figure 15 is a perspective view of the stack of figure 14, in a suitable configuration for the cooking stage of the product contained therein.
Figure 16 is an enlarged view of a head of the modular group of figure 15, in a perspective view.

The modular group of the invention (denoted in its entirety by 1 in the figures) comprises a plurality of concave matrices 10 having a concavity thereof facing upwards, destined to contain the meat, the internal surface 11 of the matrices 10 being, at least in a cross-section of the horizontal plane thereof, free of edges, corners and discontinuities.

The group 1 is suitable for forming regular and stable stacks with other identical groups 1; the groups 1 are superposed on one another, forming vertical stacks, which are flanked in horizontal rows.

The matrices 10 are of limited size in that they are made to form compact products, in which the maximum dimension is less than three times the intermediate dimension and is in any case less than 40 cm.

Further, the matrices 10 are manufactured singly, i.e. one by one, and are subsequently joined solidly to one another, arranged in a straight, horizontal and longitudinal alignment. Thanks to this, and to their modest dimensions, it is possible (and also practically advantageous) to realise the matrix by casting (typically die-casting in aluminium alloy) or by hot moulding (typically with iron-rich sheet metal), or by bending and welding parts thereof.

This aspect enables realising matrices 10 having the advantages of single traditional matrices, especially as they can have an internal lateral surface 11 which, at least in the horizontal plane section, is without edges and thus is such as to give shape to products having a compact form and which are as far as possible without sharp edges.

A plurality of covers 20 corresponds to the plurality of matrices 10, which covers 20 are for closing the upper part of the matrices 10 with a penetration into the upper mouth of the matrices 10 themselves.

The matrices 10 are arranged in the modular group 1 in a straight, horizontal and longitudinal alignment.

In the enclosed figures the matrices 10 are three in number; obviously this number can be different.

The modular group 1 further comprise a pair of heads 30 which are substantially vertical and perpendicular to the longitudinal alignment, parallel to one another and arranged at the two ends of the alignment of the matrices 10 and are external thereof.

The covers 20 are arranged aligned to one another in a straight, horizontal and longitudinal alignment, each being in a position that vertically underlies a respective matrix 10.

Each head 30 comprises at least an engagement means 40 suitable for constraining the head to a corresponding head 30 belonging to an identical underlying modular group, such as to prevent reciprocal distancing in a vertical direction.

Further, the group 1 comprises means for constraining the matrices 10 and the heads 30 to one another, forming a monolithic group, where the components 10 and 30 are solidly constrained to one another, and means for constraining the covers 20 to one another and the covers 20 to the monolithic group formed by the matrix 10 and the heads 30.

The matrices 10 are preferably joined to one another and to the heads 30 by means of short rods, preferably having a circular section 15 and 16 and being horizontal and longitudinal, ends of which are solidly constrained to the matrices or the heads.

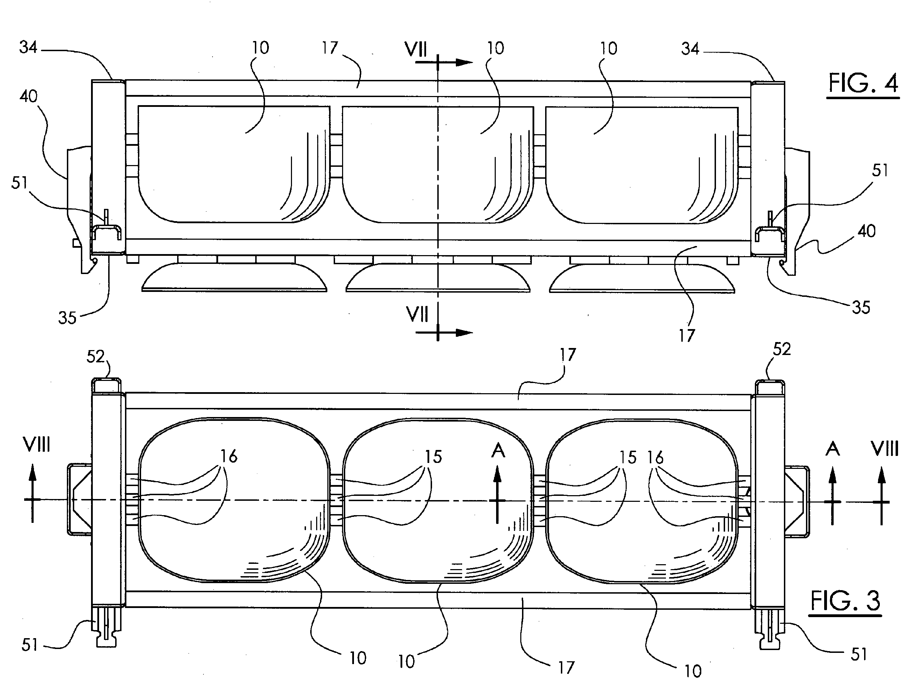

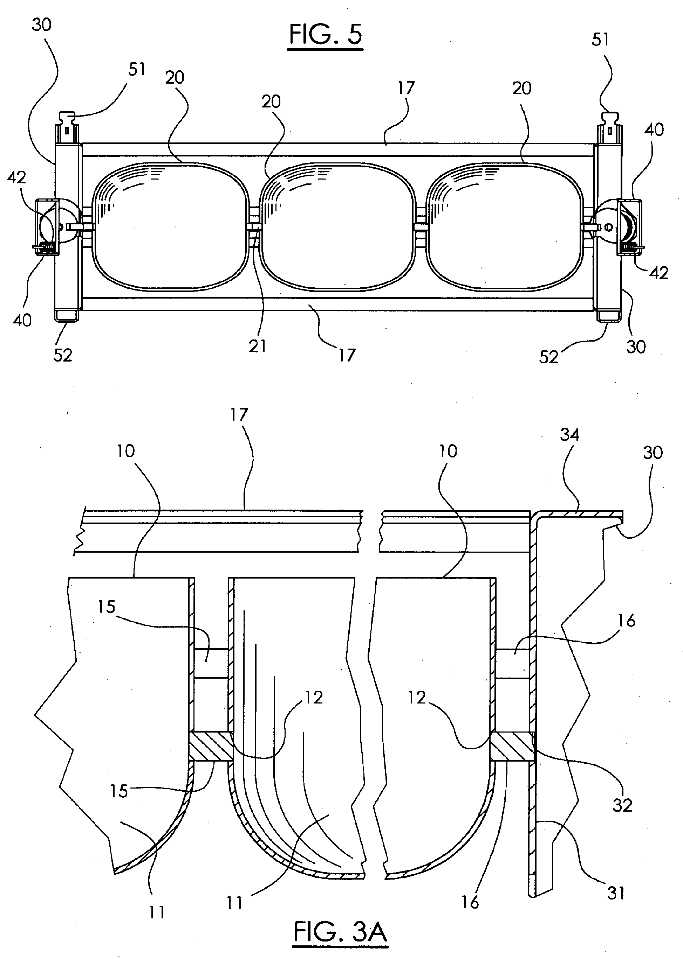

In detail (see figure 3A) a group of rods 15 (three in the figures) are provided between each adjacent pair of matrices 10, which rods 15 are interposed between the two matrices and inserted in horizontal and longitudinal through-holes 12, afforded in the thickness of the matrices 10 themselves; likewise, between each head 30 and the matrix 10 next to it there is a group of rods 16 interposed and inserted in horizontal and longitudinal through-holes 12, afforded in the thickness of the matrices 10 themselves and in through-holes 32 afforded in the thickness of the heads 30. The rods 15 and 16 are snugly inserted in the holes 12 such as not to project beyond the lateral internal surface 11 of the matrix. Finally, the rods 15, 16 are solidly fixed to the holes 12, 32 in which they are inserted, for example, by welding.

The heads 30 are advantageously constrained directly to one another by means of rods 17, ends of which rods 17 are each fixed to a respective head 30. These rods 17 give a high degree of rigidity to the monolithic group of the matrices and the heads; preferably at least a rod 17 is provided at each head corner.

The monolithic group formed by the matrices 10 and the heads 30 thus takes on a generally parallelepiped external shape. More precisely, the two heads 30 and the rods 17 identify a parallelepiped, internally of which the matrices 10 are contained. Only the covers 20 project downwards below the plane identified by the lower sides of the heads 30. The matrices 10 are preferably distant from one another, being separated by a space which is sufficient for passage of washing liquid, for cleaning the various parts.

The covers 20 are preferably supported by at least a horizontal and longitudinal crossbar 21, ends of which extend from a head 30 to another; the crossbar 21 supports the covers 20.

In an embodiment, the crossbar 21 is constrained to the heads 30 in such a way as to be able to perform limited vertical displacements with respect thereto, elastic means being provided which push the covers 20 downwards with respect to the matrices 10.

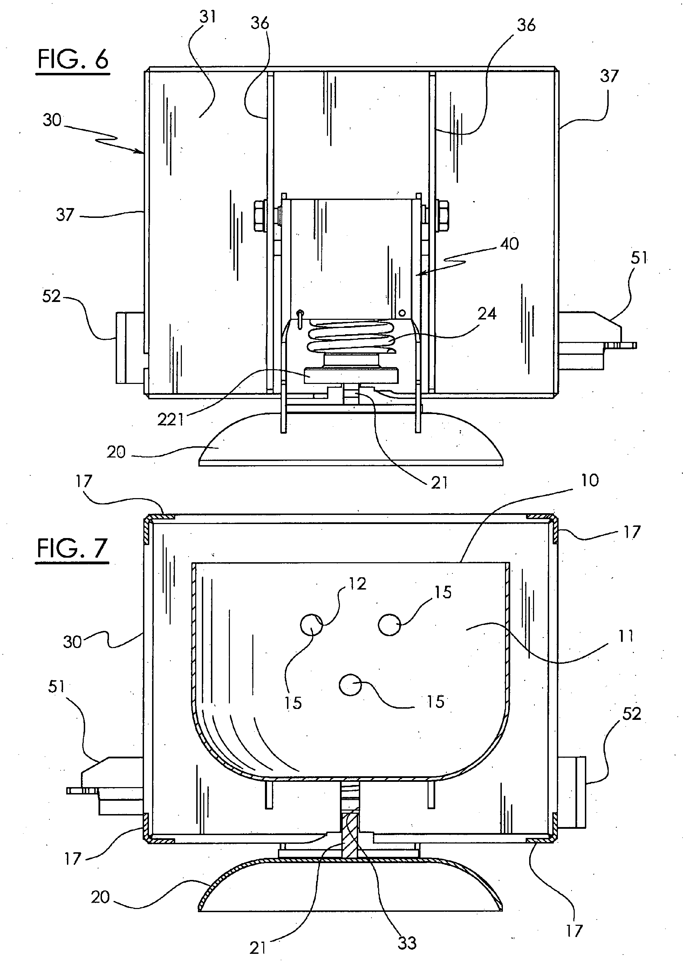

In particular, the ends of the crossbar 21 are snugly slidable in two vertically-developing guides 33 realised by through-slits afforded in the thickness of the heads 30, along the median vertical axis thereof, which start from a point located below the bottom of the matrices and reach the lower side of the heads 30 (see figure 7). The crossbar 21 is constrained by the slits 33 to slide in a vertical direction with respect to the heads 30, without any possibility of rotating about the longitudinal axis thereof.

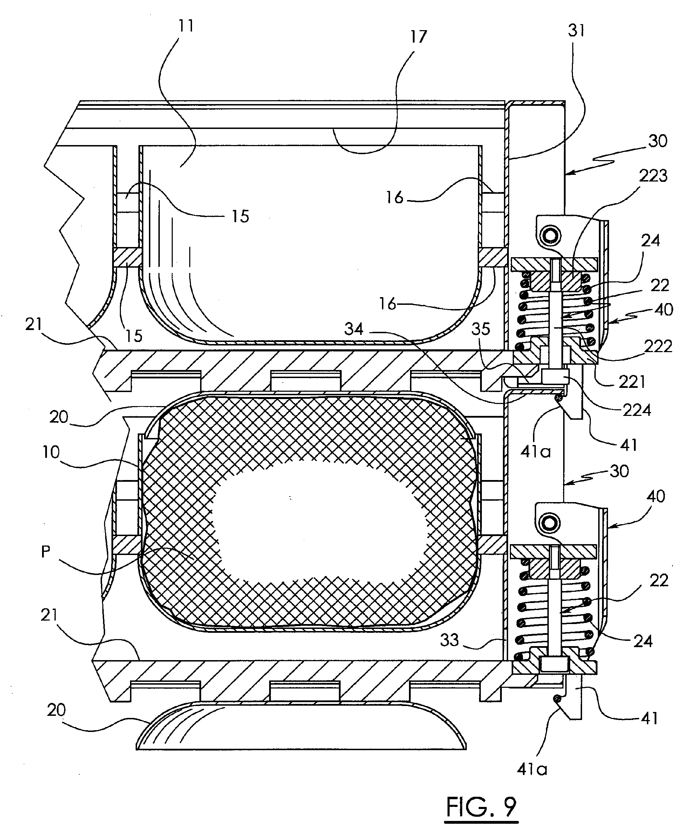

The crossbar 21 is further constrained to the heads 30 by constraining means 22, located at the two ends of the crossbar 21, which limit the downward run (see figure 9). In particular, each constraining means 22 comprises a disc 221 fixed to a respective end of the crossbar 21, which is constrained to the respective head 30 by means of a vertical guide screw 222 along the stem of which the disc 221 is free to slide; the screw 222 has a broadened lower head 224 and a threaded cylindrical stem at the upper end thereof which couples with a corresponding threaded hole afforded in the retaining body 223 fixed projectingly to the head 30. The head 224 defines the upper limit of the downward run of the crossbar 21 with respect to the heads 30; this run can be regulated by screwing or unscrewing the head 22 with respect to the body 223.

Springs 24 are interposed between the retaining bodies 223 and the discs 221, and define elastic means which push the crossbar 21 and with it the covers 20 in a downward direction with respect to the matrices 10, as they provide a push which tends to distance the crossbar 21 downwards with respect to the heads 30.

Each head 30 possesses at least an upper element destined to restingly receive and support a corresponding head 30 belonging to an identical overlying modular group, and at least a lower element destined to be rested on and supported by a corresponding head 30 belonging to an identical underlying modular group.

The upper rest element preferably extends along the upper horizontal side of the head 30, while the lower rest element extends along the lower horizontal side of the head, and the two sides of the head are substantially identical to one another.

In a preferred embodiment (though not exclusive) of the invention, the head 30 comprises a vertical rectangular sheet 31, horizontal sides of which are bent externalwise forming a projecting upper horizontal edge 34 which defines the upper rest element and a lower projecting horizontal edge 35 which defines the lower rest element.

Each head 30 comprises at least a hooking means 40 located at the lower side thereof, having an oscillating hook 41 (or a pair of hooks) with a grapple head facing downwards, and projecting downwards beyond the lower rest element 35 of the head itself and also beyond the upper element 34 of the underlying head, on which the head 30 is resting.

The oscillating hook 41 is hinged by a hinge pin 44 to two vertical ribs 35 that project perpendicularly from the head 30, and the head 410 of the hook 41 is destined to hook to the upper element 34 of the underlying head. When this happens, a recall spring 42, which constrains the oscillating hook 41 to the head 30 and acts in the direction of pulling the hook towards the head, maintains the head 410 in a stable hooking position (as illustrated in figure 9). Note that in this position, the concavity of the hook affords a little play to the thickness of the upper edge 34 and the upper edge 34 can exhibit an end tract which is slightly inclined towards the outside and downwards, with the aim of making the coupling of the two parts more secure when hooked together.

The hooking means 40 constrain the reciprocally-superposed modular groups 1 together two-by-two such as to prevent reciprocal distancing thereof in a vertical direction.

Each head 30 comprises hooking elements destined to constrain together two flanked heads 30, in a horizontal transversal direction, the horizontal hooking elements being conformed such as to realise the constraint following the arranging of the heads 30 in a flanked position.

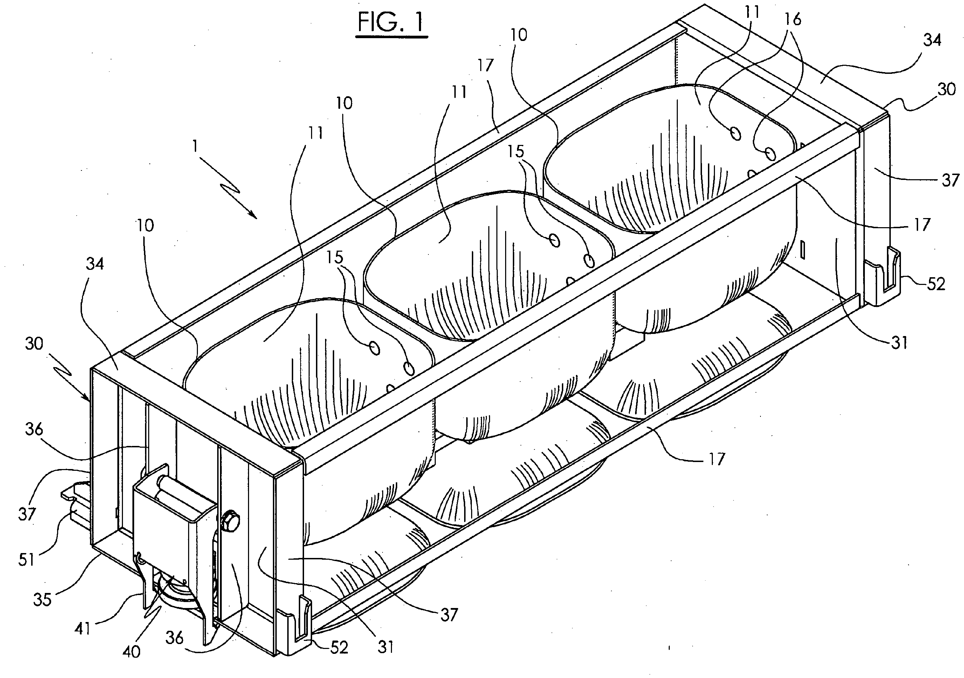

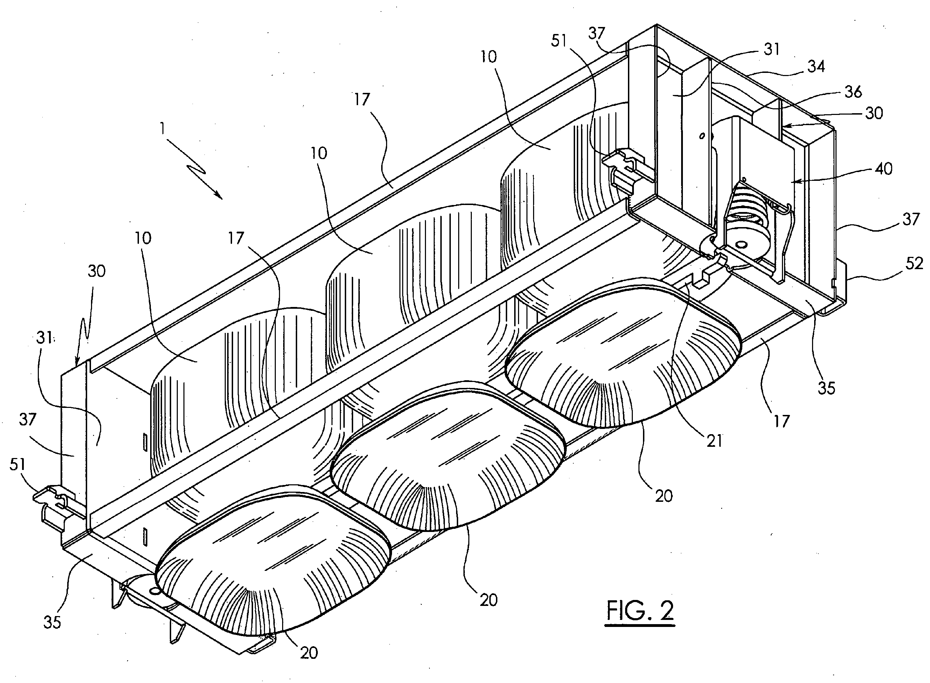

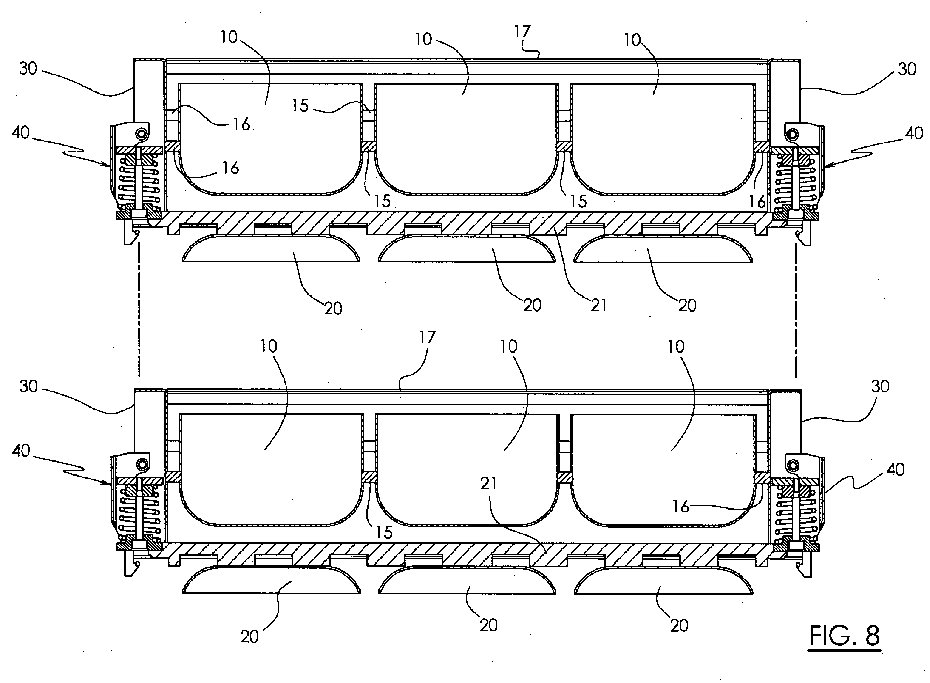

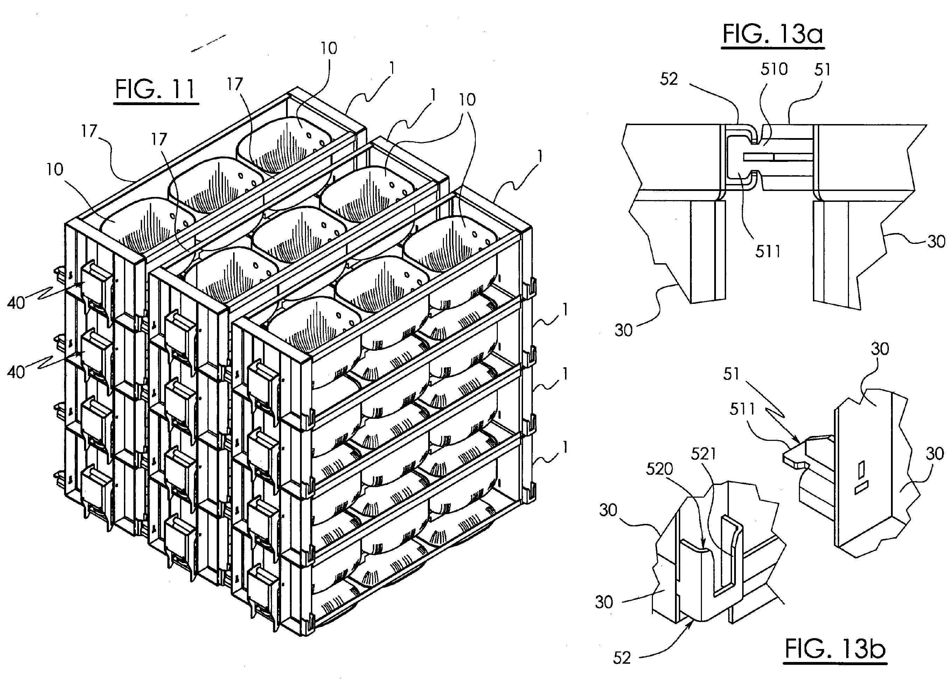

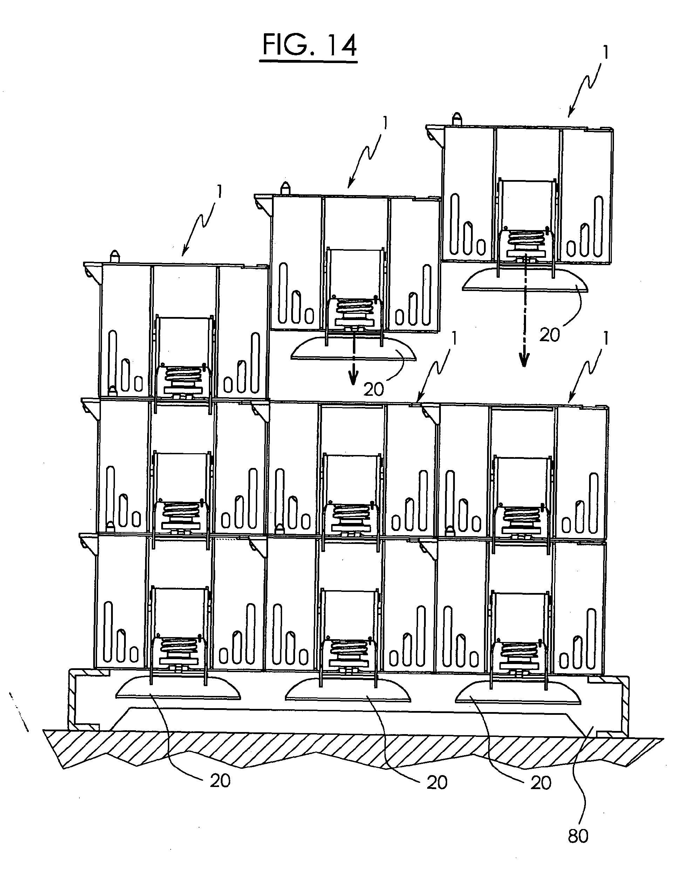

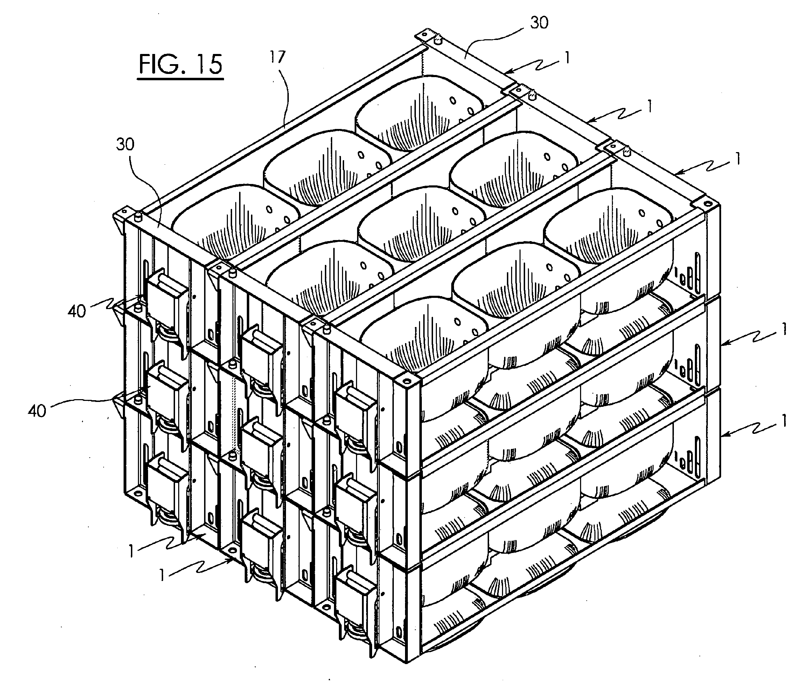

The first embodiment, illustrated in figures 1-13, and the second embodiment, illustrated in figures 14-16, differ from one another in respect to the horizontal hooking elements.

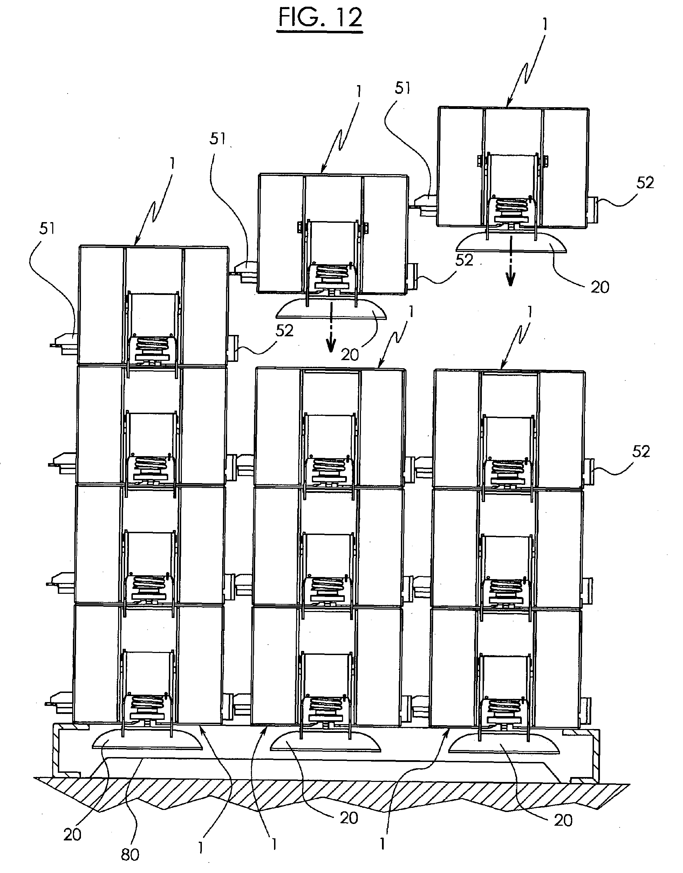

In the first embodiment, each head 30 comprises a male hooking element 51, and a female hooking element 52, which elements 51 and 52 are fixed and project externally from a vertical side and respectively from the other vertical side of the head. In particular, each head 30 comprises a male hooking element 51 which is fixed and projecting from the left vertical side (in figure 12), and destined to hook to a female element 52, and a female element 52 fixed and projecting from the right vertical side.

The hooking elements 51 and 52 are located on two vertical sides of the head 30, in proximity of the lower edge 35 thereof.

The element 52 is shaped as a member having vertical generatrices, having a vertically-developing cavity 520 that is frontally open via a frontal slit 521, a width of which is smaller than a width of the cavity 520. The male element 51 has a spur 510 that projects horizontally and bears a broadened head 511; the head is destined to penetrate vertically into the cavity 520, while the spur 510 is destined to pass through the slit 521; the coupling between the two elements occurs by vertical descending motion of the male element 51 (and the head 30 to which it is fixed) with respect to the female element 52 and penetration of the head of one into the cavity of the other.

In this embodiment, the hooking between the heads 30 of the stacked modular groups 1 means that there is a considerable horizontal distance between the heads 30 themselves, such as to enable passage of steam, which is very useful in the cooking stage of the product contained in the moulds. Further, the zone which laterally surrounds the upper part of each group 1 (where the upper part is defined by the upper portion of the heads 30, the rods 17 and the upper portion of the matrices 10) is free of obstances, including when the group is stacked constrainedly to one or more identical groups flanked on one or both sides and at the same level; i.e. there exists a space free of physical obstacles which laterally surrounds the upper part of each group when several groups are constrained in a stack and flanked to one another. This aspect has been seen to be advantageous especially in a case in which the product to be treated is inserted in coverings (bags) made of plastic; in these cases, to manipulate the covering it is advantageous for the whole zone which surrounds the upper part of each group 1 to be completely free from physical objects which would prevent extension of the bag about the upper part of the group 1.

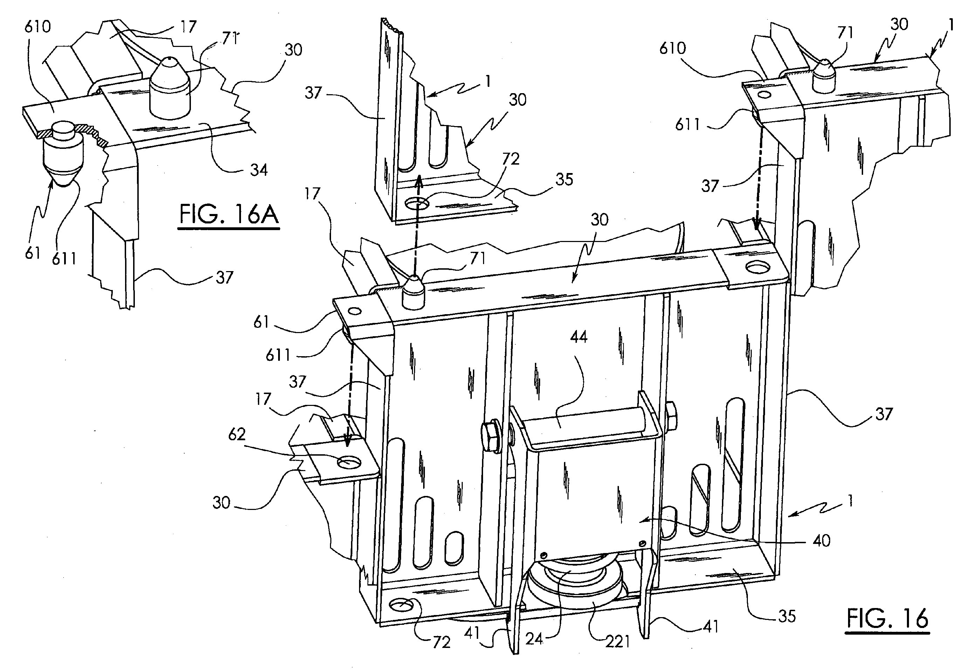

In a second embodiment (figures 14-16) each head 30 comprises a male hooking element 61, fixed to and projecting from the left side (according to figure 16) of each head 30, and destined to hook to a female element 62, and a female element 62 located at the right side.

The element 61 comprises a horizontal plate 610 fixed on the upper surface of the upper edge 34 and projecting horizontally outwards from the upper left corner of the head. The plate 610 bears a vertical pin 611, facing downwards. The element 62 is constituted by a through-hole afforded in the upper edge 34 at the right corner, destined to snugly receive (with a small amount of play) the pin 611, when two heads 30 are flanked with the respective vertical sides in contact with each other, or nearly so.

The coupling between the two elements 61 and 62 happens with a vertical descending movement of the male element 61 and the head 30 to which it is fixed, with respect to the female element 62 and the penetration of the pin 611 into the hole 62.

In this second embodiment, in the hooking-up between the heads 30 and therefore between the modular groups 1 there is substantial contact between the vertical sides of the heads, with the aim of realising a compact stacking of the groups 1 such as to reduce the space occupied thereby to a minimum. Each head 30 further comprises second hooking elements (illustrated in the second embodiment, but which can also be comprised in the first embodiment) destined to reciprocally constrain, in horizontal directions, two heads 30 that are superposed on one another in contact, the second hooking elements being conformed such as to realise a constraint following arrangement of the heads 30 in reciprocally superposed positions.

In particular, each head 30 comprises a male hooking element 71, fixed and projecting upwards from the upper horizontal edge 34 of the head 30, which is destined to snugly penetrate into a corresponding female element 72, and a female element 72, in the form of a through-hole, afforded in the lower horizontal edge 35 of the head 30. In particular, the male element 71 is constituted by a vertical pin, facing upwards and fixed on the upper edge 34. The element 72 is constituted by a through-hole afforded in the lower edge 35, located on the vertical of the pin 72, destined to snugly receive (with a small amount of play) the pin 72 of a lower head 30.

The coupling between the two elements 71 and 72 is done with a vertical descending motion of the head 30 up to resting in contact on the upper edge 34 of a lower head.

In use, a plurality of identical modular groups 1 are arranged in superposed layers on a special bench 80 for forming a stack (figures 12 and 14).

Figure 12 schematically illustrates the stacking procedure. The stacking proceeds by first placing a modular group 1 at the left end on the bench 80 and then the following groups 1 to the right of the final group 1 located in position.

When each row is finished, a new row is started above it, going from left to right. Each group 1, while it is arranged in a stack to the right of a preceding group 1, is also constrained to the preceding group by the hooking elements 51, 52, which keep the groups constrained in a transversal horizontal direction.

The contact between two reciprocally-associated elements 51, 52 also determines the distance between the lateral edges 37 of two adjacent heads. This distance is chosen such as to leave a space between the heads which is sufficiently large to facilitate circulation of the steam, air and hot water during the stages of cooking the meat, and the air and/or the cold water during the cooling stages.

The stacking of the groups 1 of the second embodiment is substantially done in the same way.

In this case too (figure 14), each group 1, while it is arranged in a stack on the right of a preceding group, is also constrained thereto by the hooking elements 61, which penetrate into the holes 62 of the head of the preceding group arranged in a stack. The groups 1 are thus constrained in a transversal horizontal direction.

During the vertical movement of a group resting on another group, the pins 71 of the underlying group 1 are also inserted into the through-holes 72 of the overlying group 1, such as to realise a bilateral coupling which constrains them reciprocally in a horizontal direction, considerably increasing the stability thereof.

In superposing a group 1 vertically on another group 1, the covers 20 of the overlying group penetrate into the mouths of the matrices 10 of the underlying group, up to coming into contact and thus compressing the product P located internally thereof. The reaction produced by the compression of the meat pushes the covers 20 upwards, possibly overcoming the push of the springs 24.

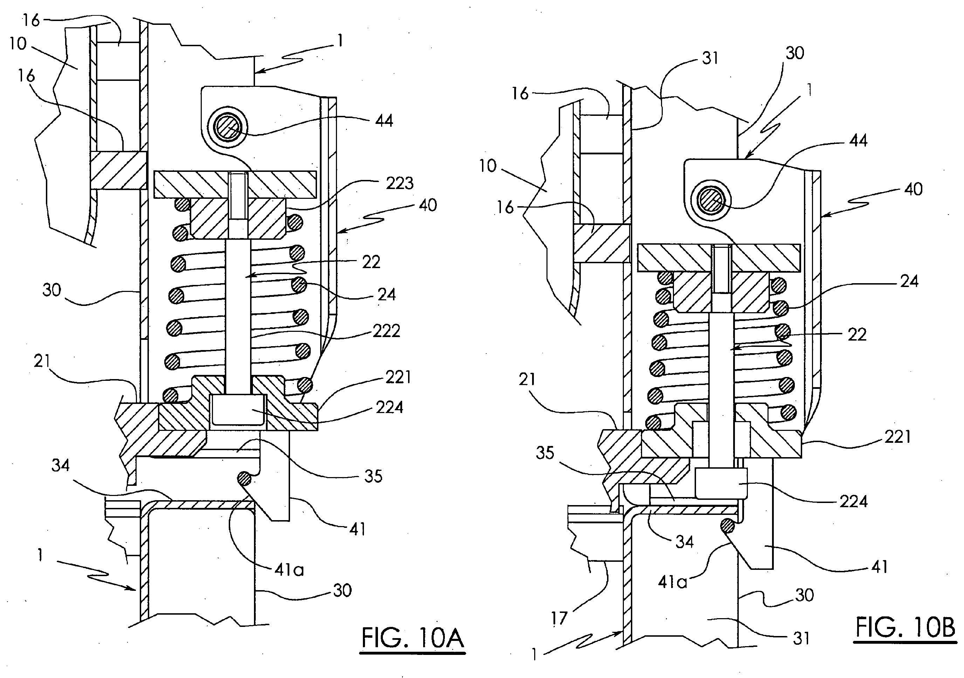

To constrain the two superposed groups to one another, mechanical machines have to be used to push the overlying group downwards, overcoming the push of the springs 24, up to realising the snap-coupling of the oscillating hook 41 with the upper edge 34 of the underlying head 30 (figure 10B), when the upper edge 34 comes into contact or nearly into contact with the lower edge 35 of the overlying head. This snap-coupling occurs automatically following the vertical-direction lowering of the overlying group. First the inclined side 41a of the hook 41 slides against the external end 34a of the edge 34, producing a slight angular opening of the hook 41 (with a rotation about the hinge 44) (see figure 10A); then, when the lower edge 35 of the overlying head is resting on the underlying edge 34, the grapple of the hook 34 is recalled by the spring 42 to below the end 34a (figure 10B).

Naturally the hooking of the two hooking means 40 on the two heads 30 of the same group 1 is done simultaneously.

The unhooking of the two modular groups 1 can be obtained when necessary by manually or automatically activating the oscillating hooks 41 in order to return them into the release position and thus free the hooking constraint. Once the two modular groups 1 are superposed, and constrained to one another by the means 40, the covers 20 are pushed towards the inside of the respective matrices by the action of the springs 24. Thanks to the small discs 221 which can slide on the guide screws 222, the compression of the springs 24 pushes the covers 20 to further compress the meat contained in the matrices 10.

An eventual upwards push received by a group 1 by an underlying group would not produce in any case a reciprocal distancing between the two groups as they are constrained to one another in a vertical direction by the hooking means 40.

The groups 1 are stacked on one another after the respective matrices 10 have been loaded with the products to be formed.

Otherwise the matrices 10 of the groups 1 are loaded with the respective products, gradually as they have been arranged in the respective stacked positions.

In particular, a hermetically-closed impermeable wrapper containing vacuum-packed meat is inserted into the cavity of each matrix 10. In order to realise the weight loss, a portion of the wrapper is left empty as it exceeds the portion required for containing the meat. The exceeding portion is left projecting externally of the concavity of the matrix 2, in the space comprised between two adjacent flanked matrices 10.

Thanks to the modules 1 of the invention, the final stack will be much more compact and stable due to the coupling between the elements 51 and 52, or the elements 61 and 62, which guarantees the transversal stability between each pair of superposed modules 1, thanks to the coupling of the pins 71 and the respective holes 72 which guarantees the transversal stability between each pair of flanked modular groups 1, and thanks to the oscillating hooks 41 which vertically block each pair of superposed modules 1.

The bilateral constraint between the through-holes 72 and the pins 71 guarantees correct reciprocal positioning and a high level of transversal stability of the upper modular group 1 with respect to the lower modular group 1.

These characteristics also make the stack easy to move and transport as they enable the use of moving systems that are more or less automatic and relatively simple.

The same results might also be obtained with modular groups 1 realised with slightly different constructional shapes.

For example, the hooking elements 61 could be located in the lower part of the heads 30, turning the pins 611 upwards-facing.

Further, in a different embodiment, the crossbar 21, which bears the covers 20, is fixed to the heads 30 and made solid to the respective matrices 10. Obviously an expert technician in the sector might make further technical-applicational modifications to the modular groups 1 as described above, without its forsaking the ambit of the invention as claimed herein below.

## Claims

1. The modular group for forming compact products, comprising:
a plurality of concave matrices (10), each destined to contain and give shape to a product a maximum dimension of which does not exceed three times an intermediate dimension thereof, having concavities facing upwards, the matrices (10) being manufactured singly and being solidly joined to one another, arranged in a longitudinal, straight, horizontal alignment;
a pair of heads (30), substantially vertical and perpendicular to the longitudinal alignment of the matrices (10), parallel to one another, arranged at two ends of the alignment itself and externally thereof, each head (30) comprising at least a hooking means (40) suitable for constraining the head (30) to a corresponding head (30) belonging to an identical and underlying modular group, such as to prevent reciprocal distancing of the heads in a vertical direction,
a plurality of covers (20) destined to close mouths of the matrices (10), arranged aligned to one another in a straight, horizontal and longitudinal alignment,
means (15, 16, 17) for constraining the matrices (10) and/or the heads (30) to one another to form a monolithic group, and means (21, 33) destined to constrain the covers (20) to one another and the covers (20) to the monolithic group formed by the matrices and the heads,
the groups (1) being stably stackable on one another, in vertical columns and in horizontal rows,
**characterised in that** it comprises a horizontal longitudinal crossbar (21), ends of which extend from a head (30) to another, which crossbar (21) supports the covers (20), in which the crossbar (21) is constrained to the heads (30) and is able to make limited vertical displacements with respect to the heads (30), elastic means (24) being comprised to push the covers (20) downwards with respect to the matrices (10).

2. The group of claim 1, **characterised in that** the lateral internal surface of the matrices is free of edges, at least in a section thereof in a horizontal plane.

3. The group of claim 1, **characterised in that** the matrices (10) of each group are joined to one another and to the heads (30) by means of short horizontal and longitudinal rods (15, 16), ends of which are solidly constrained to the matrices (10) or to the heads (30).

4. The group of claim 1, **characterised in that** the matrices (10) are joined to one another, at a reciprocal distance.

5. The group of claim 1, **characterised in that** the covers (20) are in a position in which each cover (20) is vertically underlying a respective matrix (10).

6. The group of claim 1, **characterised in that** each head (30) exhibits at least an upper element (34) destined to restingly receive and support a corresponding head (30) belonging to an identical overlying modular group, and at least a lower element (35) destined to be restingly placed on and be supported by a corresponding head (30) belonging to an identical underlying modular group.

7. The group of claim 6, **characterised in that** the upper rest element (34) extends along the upper horizontal side of the head (30), while the lower rest element (35) extends along the lower horizontal side of the head (30), and the two sides of the head (30) are substantially identical to one another.

8. The group of claim 1, **characterised in that** each head (30) comprises at least a releasable hooking means (40) having a hook (41) with a grapple head facing downwards and projecting with respect to the lower rest element (35), which hook (41) is destined to hook to the upper rest element (34) of a corresponding head (30) belonging to an identical underlying modular group, the hooking means (40) constraining the reciprocally-superposed modular groups (1) two-by-two such as to prevent reciprocal distancing thereof in a vertical direction.

9. The group of claim 1, **characterised in that** each head (30) comprises first hooking elements (51, 52, 61, 62) destined to reciprocally constrain, in a transversal horizontal direction, two flanked heads (30), the first horizontal hooking elements being conformed such as to realise a constraint following an arrangement of the heads (30) in a reciprocally flanked position.

10. The group of claim 10, **characterised in that** the hooking elements (51, 52) are located on the two vertical sides of the head (30), in proximity of the lower edge (35) thereof.

11. The group of claim 1, **characterised in that** each head (30) comprises second hooking elements (71, 72) destined to reciprocally constrain, in horizontal directions, two heads (30) that are reciprocally contactingly superposed on one another, the second hooking elements being conformed such as to realise the constraint following arrangement of the heads (30) in a reciprocally superposed position.

## Patentansprüche

1. Modulgruppe zum Formen kompakter Produkte, Folgendes umfassend:
mehrere konkave Matrizen (10), die jeweils dafür vorgesehen sind, ein Produkt zu enthalten und diesem eine Form mit einer maximalen Abmessung zu verleihen, die das Dreifache von deren mittlerer Abmessung nicht überschreitet, wobei die Form Hohlräume aufweist, die nach oben weisen, wobei die Matrizen (10) einzeln hergestellt werden und fest miteinander verbunden in einer geraden, horizontalen Längsausrichtung angeordnet sind,
ein Paar Kopfenden (30), die im Wesentlichen vertikal und senkrecht zur Längsausrichtung der Matrizen (10), parallel zueinander und an zwei Enden der Ausrichtung selbst sowie außerhalb davon angeordnet sind, wobei jedes Kopfende (30) mindestens ein Einhakmittel (40) umfasst, das dafür geeignet ist, die Kopfenden (30) derart an ein entsprechendes Kopfende (30) zu binden, das zu einer identischen und darunterliegenden Modulgruppe gehört, dass ein gegenseitiges Entfernen der Kopfenden voneinander in vertikaler Richtung verhindert wird,
mehrere Abdeckungen (20), die dafür vorgesehen sind, die Mundöffnungen der Matrizen (10) zu verschließen, und aneinander ausgerichtet in einer geraden und horizontalen Längsausrichtung angeordnet sind,
Mittel (15, 16, 17), um die Matrizen (10) und/oder die Kopfenden (30) aneinander zu binden, um eine einstückige Gruppe zu bilden, und Mittel (21, 33), die dafür vorgesehen sind, die Abdeckungen (20) aneinander und an die einstückige Gruppe zu binden, die von den Matrizen und den Kopfenden gebildet wird,
wobei die Gruppen (1) in vertikalen Säulen und in horizontalen Reihen stabil aufeinander stapelbar sind,
**dadurch gekennzeichnet, dass** sie eine horizontale, längsgerichtete Querstange (21) umfasst, deren Enden sich von einem Kopfende (30) zum anderen erstrecken, wobei die Querstange (21) die Abdeckungen (20) trägt, wobei die Querstange (21) an die Kopfenden (30) gebunden und in der Lage ist, vertikale Verlagerungen im Verhältnis zu den Kopfenden (30) zu begrenzen, wobei elastische Mittel (24) enthalten sind, um die Abdeckungen (20) im Verhältnis zu den Matrizen (10) nach unten zu drücken.

2. Gruppe nach Anspruch 1, **dadurch gekennzeichnet, dass** die Seiteninnenfläche der Matrizen frei von Kanten ist, mindestens in einem Abschnitt derselben in einer horizontalen Ebene.

3. Gruppe nach Anspruch 1, **dadurch gekennzeichnet, dass** die Matrizen (10) jeder Gruppe mittels kurzer horizontaler und längsgerichteter Stangen (15, 16), deren Enden fest an die Matrizen (10) oder die Kopfenden (30) gebunden sind, miteinander und mit den Kopfenden (30) verbunden sind.

4. Gruppe nach Anspruch 1, **dadurch gekennzeichnet, dass** die Matrizen (10) in einem gegenseitigen Abstand miteinander verbunden sind.

5. Gruppe nach Anspruch 1, **dadurch gekennzeichnet, dass** sich die Abdeckungen (20) in einer Position befinden, in der jede Abdeckung (20) vertikal unter einer entsprechenden Matrize (10) liegt.

6. Gruppe nach Anspruch 1, **dadurch gekennzeichnet, dass** jedes Kopfende (30) mindestens ein oberes Element (34) aufweist, das dafür vorgesehen ist, ein entsprechendes Kopfende (30), das zu einer identischen darüberliegenden Modulgruppe gehört, aufliegend aufzunehmen und zu tragen, und mindestens ein unteres Element (35), das dafür vorgesehen ist, aufliegend auf einem Kopfende (30) angeordnet zu sein und von einem entsprechenden Kopfende (30) getragen zu werden, das zu einer identischen darunterliegenden Modulgruppe gehört.

7. Gruppe nach Anspruch 6, **dadurch gekennzeichnet, dass** sich das obere Auflageelement (34) entlang der oberen horizontalen Seite des Kopfendes (30) erstreckt, während sich das untere Auflageelement (35) entlang der unteren horizontalen Seite des Kopfendes (30) erstreckt, und dass die zwei Seiten des Kopfendes (30) im Wesentlichen identisch sind.

8. Gruppe nach Anspruch 1, **dadurch gekennzeichnet, dass** jedes Kopfende (30) mindestens ein lösbares Einhakmittel (40) umfasst, das einen Haken (41) mit einem Greifkopf aufweist, der nach unten weist und im Verhältnis zum unteren Auflageelement (35) hervorsteht, wobei der Haken (41) dafür vorgesehen ist, in das obere Auflageelement (34) eines entsprechenden Kopfendes (30) einzuhaken, das zu einer identischen darunterliegenden Modulgruppe gehört, wobei das Einhakmittel (40) die wechselweise darüberliegenden Modulgruppen (1) zwei-mal-zwei zusammenhält, so dass ein gegenseitiges Entfernen voneinander in vertikaler Richtung verhindert wird.

9. Gruppe nach Anspruch 1, **dadurch gekennzeichnet, dass** jedes Kopfende (30) erste Einhakelemente (51, 52, 61, 62) umfasst, die dafür vorgesehen sind, zwei angrenzende Kopfenden (30) in einer horizontalen Querrichtung wechselseitig zu binden, wobei die ersten horizontalen Einhakelemente derart übereinstimmen, dass eine Bindung umgesetzt wird, die einer Anordnung der Kopfenden (30) in einer wechselweise angrenzenden Position folgt.

10. Gruppe nach Anspruch 10, **dadurch gekennzeichnet, dass** die Einhakelemente (51, 52) an den zwei vertikalen Seiten des Kopfendes (30) in der Nähe dessen unterer Kante (35) angeordnet sind.

11. Gruppe nach Anspruch 1, **dadurch gekennzeichnet, dass** jedes Kopfende (30) zweite Einhakelemente (71, 72) umfasst, die dafür vorgesehen sind, zwei Kopfenden (30) in horizontalen Richtungen wechselseitig zu binden, die in gegenseitigem Kontakt übereinander gesetzt sind, wobei die zweiten Einhakelemente derart übereinstimmen, dass die Bindung umgesetzt wird, die der Anordnung der Kopfenden (30) in einer wechselweise übereinanderliegenden Position folgt.

## Revendications

1. Groupe modulaire pour former des produits compacts, comprenant :
une pluralité de matrices concaves (10), destinées chacune à contenir et conformer un produit dont une dimension maximale ne dépasse pas trois fois une dimension intermédiaire, comportant des concavités orientées vers le haut, les matrices (10) étant fabriquées séparément et étant solidement jointes entre elles, agencées selon un alignement longitudinal, droit et horizontal ;
une paire de têtes (30), essentiellement verticales et perpendiculaires à l'alignement longitudinal des matrices (10), parallèles entre elles, agencées à deux extrémités de l'alignement lui-même et à l'extérieur de celui-ci, chaque tête (30) comprenant au moins un moyen d'accrochage (40) adapté pour contraindre la tête (30) à une tête correspondante (30) appartenant à un groupe modulaire identique et sous-jacent, de manière à éviter en espacement réciproque des têtes en direction verticale,
une pluralité de couvercles (20) destinés à fermer les embouchures des matrices (10), agencés alignés entre eux selon un alignement droit, horizontal et longitudinal,
un moyen (15, 16, 17) pour contraindre les matrices (10) et/ou les têtes (30) entre elles afin de former un groupe monolithique, et un moyen (21, 33) destiné à contraindre les couvercles (20) entre eux et les couvercles (20) sur le groupe monolithique formé par les matrices et les têtes,
les groupes (1) pouvant être empilés l'un sur l'autre de manière stable en colonnes verticales et en rangées horizontales,
**caractérisé en ce qu'**il comprend une barre transversale horizontale longitudinale (21) dont des extrémités s'étendent d'une tête (30) à l'autre, ladite barre transversale (21) supportant les couvercles (20), dans lequel la barre transversale (21) est contrainte sur les têtes (30) et peut effectuer des déplacements verticaux limités par rapport aux têtes (30), un moyen élastique (24) étant compris pour pousser les couvercles (20) vers le bas par rapport aux matrices (10).

2. Groupe selon la revendication 1, **caractérisé en ce que** la surface interne latérale des matrices ne comporte pas de bords, au moins sur une section correspondante dans un plan horizontal.

3. Groupe selon la revendication 1, **caractérisé en ce que** les matrices (10) de chaque groupe sont jointes entre elles et aux têtes (30) à l'aide de courtes tiges horizontales et longitudinales (15, 16), dont des extrémités sont solidement contraintes aux matrices (10) ou aux têtes (30).

4. Groupe selon la revendication 1, **caractérisé en ce que** les matrices (10) sont jointes entre elles à une distance réciproque.

5. Groupe selon la revendication 1, **caractérisé en ce que** les couvercles (20) se trouvent dans une position dans laquelle chaque couvercle (20) est verticalement sous-jacent à une matrice respective (10).

6. Groupe selon la revendication 1, **caractérisé en ce que** chaque tête (30) comporte au moins un élément supérieur (34) destiné à recevoir et supporter au repos une tête correspondante (30) appartenant à un groupe modulaire sus-jacent identique, et au moins un élément inférieur (35) destiné à être placé au repos sur une tête correspondante (30) appartenant à un groupe modulaire sous-jacent identique et à être supporté par celle-ci.

7. Groupe selon la revendication 6, **caractérisé en ce que** l'élément de pose supérieur (34) s'étend le long du côté horizontal supérieur de la tête (30), alors que l'élément de pose inférieur (35) s'étend le long du côté horizontal inférieur de la tête (30), et les deux côtés de la tête (30) sont essentiellement identiques entre eux.

8. Groupe selon la revendication 1, **caractérisé en ce que** chaque tête (30) comprend au moins un moyen d'accrochage détachable (40) comportant un crochet (41) avec une tête de saisie orientée vers le bas et dépassant par rapport à l'élément de pose inférieur (35), ledit crochet (41) étant destiné à s'accrocher à l'élément de pose supérieur (34) d'une tête correspondante (30) appartenant à un groupe modulaire sous-jacent identique, le moyen d'accrochage (40) contraignant les groupes modulaires (1) superposés de manière réciproque deux par deux de manière à éviter un espacement réciproque entre eux en direction verticale.

9. Groupe selon la revendication 1, **caractérisé en ce que** chaque tête (30) comprend de premiers éléments d'accrochage (51, 52, 61, 62) destinés à contraindre réciproquement, en direction horizontale transversale, deux têtes encadrées (30), les premiers éléments d'accrochage horizontaux étant conformés de manière à exercer une contrainte suite à un agencement des têtes (30) dans une position réciproquement encadrée.

10. Groupe selon la revendication 10, **caractérisé en ce que** les éléments d'accrochage (51, 52) sont situés sur les deux côtés verticaux de la tête (30), à proximité du bord inférieur (35) correspondant.

11. Groupe selon la revendication 1, **caractérisé en ce que** chaque tête (30) comprend des deuxièmes éléments d'accrochage (71, 72) destinés à contraindre réciproquement, selon des directions horizontales, deux têtes (30) qui sont réciproquement superposées l'une sur l'autre en contact, les deuxièmes éléments d'accrochage étant conformés de manière à exercer la contrainte suite à l'agencement des têtes (30) dans une position réciproquement superposée.
